# FASCICULE DE BREVET EUROPEEN

(11) **EP 0 242 287 B1**
(45) Date de publication et mention de la délivrance du brevet: **15.12.1993**
(21) Numéro de dépôt: 87400824.6
(22) Date de dépôt: 10.04.1987
(51) Int. Cl.: A23L 1/31, B65B 25/06, B65B 9/04

(54) **Installation pour la préparation de produits alimentaires élaborés**
Anlage zum Bereiten von Fertigmahlzeiten
Apparatus for preparing elaborate food products

(30) Priorité: 14.04.1986 FR 8605294
(43) Date de publication de la demande: 21.10.1987
(73) Titulaire: SNC LE PETIT CUISINIER, Société dite:, F-59650 Villeneuve d'Ascq (FR)
(72) Inventeur: Deneuville, Claude, F-59650 Villeneuve d'Ascq (FR); Hondermarck, Dominique, F-59700 Marcq en Baroeul (FR)
(74) Mandataire: Wagret, Frédéric

(56) Documents cités:
- FR-A- 2 000 297
- FR-A- 2 416 676
- FR-A- 2 544 179
- GB-A- 587 702
- US-A- 3 958 394
- US-A- 4 047 476

## Description

La présente invention concerne une installation permettant la préparation de produits alimentaires élaborés du type "plats cuisinés".

L'invention concerne d'une façon générale l'industrie alimentaire et plus particulièrement la préparation de plats cuisinés conditionnés par unité de consommation et constitués d'un composant principal (tel que viandes, poissons, oeufs, légumes) agrémenté d'un second composant constituant une sauce.

Un premier objet de l'invention est de permettre la réalisation de plats conditionnés dans un emballage léger, par exemple un sachet en matière synthétique, le produit dans ce conditionnement étant susceptible d'être conservé pendant une durée limitée, mais s'étendant sur plusieurs semaines, à une température de "froid positif" c'est-à-dire comprise entre 1 et 5° et de préférence aux environs de 3°C.

Et l'invention permet notamment de réaliser des préparations alimentaires de haute qualité notamment du point de vue de la fraîcheur et ceci aussi bien pour des plats de consommation courante et quotidienne que pour des plats plus recherchés et de qualité gastronomique.

On connait par le document GB-A-587 702 un procedé de préparation de produits carnés soumis à un brunissement superficiel aprés quoi le produit associé à une sauce (gravy) est mis en boite pour être sterilisé à la temperature d'ebullition pendant plusieurs heures.

On connait egalement par le document USA-A-3.958.394 un ensemble de conditionnement de produits alimentaires mis en barquettes scellées.

D'autres caractéristiques et avantages de l'invention ressortiront de la description qui suit
La figure 1 représente un schéma général des différentes fonctions et étapes de mises en oeuvre, dans le cadre du procédé selon l'invention.
La figure 2 représente un diagramme schématique illustrant une forme de réalisation de l'installation selon l'invention.

Selon la figure 1 on voit que les composants de base ou matières premières amenés à l'atelier de traitement à un poste d'arrivée 1 sont triés et distribués vers des enceintes de stockage séparées en fonction de leurs caractéristiques.

C'est ainsi que depuis le poste d'arrivée 1, les produits nécessitant une conservation par le froid (viandes, poissons, etc...) sont acheminés vers la chambre froide 2 maintenue à une température appropriée ; les produits de crèmerie sont acheminés vers une enceinte 3 maintenue à une température de l'ordre de 5 à 8° ; les produits d'épicerie (légumes et condiments appertisés) sont stockés dans l'enceinte 4 à température ambiante, tandis que les épices sont amenées dans la réserve spécifique 5. Certains produits peuvent être livrés réfrigérés (+ 3°C) et passent directement en préparation dans le local 11.

Selon l'invention et ainsi qu'on le voit sur la figure 1, l'ensemble du procédé utilise deux lignes de préparation séparées à savoir une première ligne de préparation (figurée par le cadre en pointillé 6 de la figure 1) affectée à la précuisson des composants solides et une ligne de préparation, (schématisée par le cadre en pointillés 7 de la figure 1), affectée à la précuisson d'une phase arômatique liquide ; et les deux lignes de préparation se rejoignent sur une ligne de conditionnement unique ; (schématisée par le cadre en pointillés 8 de la figure 1), aboutissant à la phase de cuisson 9.

Les produits solides alimentant la ligne de préparation 6 sont généralement constitués de produits carnés notamment pièces de viandes ou de poissons alimentées depuis l'aire de stockage ou chambre froide 2.

Préalablement les produits (lorsqu'ils ont été stockés à l'état congelé) passent dans un tunnel de décongélation à micro-ondes 10 suivi d'une phase de préparation dans le local spécialisé 11 où les produits sont finalement déballés, calibrés, assaisonnés, pesés et contrôlés, mis en bacs et laissés au repos à une température de l'ordre de 3°C pendant une période de quelques heures afin de permettre la réadaptation des produits à une température positive.

Les produits en bac au sortir de la chambre de repos 11 sont acheminés, pour subir leur précuisson dans la ligne 6 vers les tables de préparation 12, 12ʹ.

La table 12 est affectée à la préparation avant précuisson des viandes destinées à subir une opération de braisage dans le bain d'huile 13 ou dans une enceinte contentant un fluide gazeux à température appropriée.

La chaîne correspondant à la table 12ʹ et au bain 13ʹ alimentée en eau proche de la température d'ébullition est affectée au traitement de blanchiment de surface de produits tels que poissons, viandes blanches, etc...

Que ce soit en phase gazeuse, ou dans l'huile pour effectuer un brunissage ou dans l'eau pour effectuer un blanchement le principal objectif de cette phase de précuisson est d'obtenir une cautérisation extérieure de l'aliment solide ce qui permettra au cours de la cuisson finale d'éviter au mieux le dessèchement de cet aliment par une production excessive d'exsudat.

Les aliments solides qui ont subi une opération de pochage à l'eau sont soumis en sortie de la cuve à une phase de lavage par ruissellement d'eau pour les nettoyer des impuretés résiduelles dont en particulier l'écume dans un poste de lavage rinçage 44.

La figure 2 donne une illustration schématique de la réalisation de l'installation et on voit que la table de préparation 12 permet la réception des pièces de viandes individuelles 14, 14ʹ, 15, 15ʹ dans les bacs disposés face au poste d'entrée 16 de la cuve de braisage 13.

Les produits solides ainsi exposés sur les tables 12, 12ʹ sont protégés de toute contamination par un flux d'air laminaire stérile diffusé depuis le caisson supérieur 17.

Les produits carnés c'est-à-dire les morceaux de viande sont alimentés en continu vers le convoyeur formé d'un ou éventuellement de deux tapis 18, 18ʹ traversant le bain d'huile 19 maintenu à la température convenable par les moyens de chauffage 20 soumis à une régulation permettant de contrôler rigoureusement la température, le bain d'huile pouvant être remplacé par une phase gazeuse (air, gaz neutre ou vapeur d'eau) à température élevée (100 à 200°C).

La vitesse de défilement du ou des convoyeurs est également rigoureusement contrôlée en fonction de la température de façon à permettre l'effet de braisage et de coloration par cautérisation superficielle des pièces de viande qui sont ainsi débitées en continu au poste de sortie 21.

Selon une caractéristique particulière de l'installation, le bain d'huile 19 est relié par la canalisation 22 (munie de pompe et de moyens de filtration non représentés) à la cuve de stockage 23.

Il est ainsi possible dans les périodes de non-utilisation de vider le bain 13 pour réintroduire l'huile dans l'enceinte close 23 où elle est soustraite aux sources d'oxydation extérieures.

Les produits carnés braisés (ou les poissons et viandes blanches pochées) débités individuellement au poste de sortie 21 peuvent alors être acheminés vers la ligne de conditionnement 8 (figure 1) où ils vont être réunis dans des conteneurs tels que les barquettes individuelles 24,24ʹ,25,25ʹ à la phase liquide aromatique préparée depuis la seconde ligne 7. Le poste 8 peut être équipé d'un caisson de diffusion d'air laminaire stérile analogue à celui prévu au-dessus des tables 12, 12ʹ.

La ligne de fabrication 7 est affectée à la préparation d'une phase aromatique liquide comportant les ingrédients qui, après cuisson finale dans la phase 9, reconstitueront la sauce d'accompagnement présente dans le plat cuisiné terminé.

La phase 7 n'a donc pas pour objet de préparer une sauce définitive mais une base aromatique et condimentaire à l'état liquide ou sensiblement liquide et qui, après son incorporation dans l'ensemble contenant notamment le produit solide, et après cuisson définitive, constituera la sauce caractéristique du plat cuisiné.

Et selon l'invention cette phase aromatique liquide est préparée dans des conditions automatiques assurant une parfaite aseptie de la préparation.

A cet effet l'invention fait appel à un ensemble robotisé constitué d'au moins une et de préférence d'une pluralité, par exemple dans le cas de la figure 1 de deux cuves de préparation respectivement 26 et 27.

Chaque cuve est associée à des moyens de chauffage, par exemple sous forme d'une jaquette chauffante 28 (figure 2) et à des moyens d'agitation constitués d'un et de préférence plusieurs agitateurs internes notamment d'agitateurs à sens de rotation inversé ; l'un au moins de ces agitateurs est pourvu de moyens de raclage constitués de lames flexibles prenant appui sur la paroi intérieure de la cuve. Le ou les agitateurs (référence 29 figure 2) sont entraînés depuis un moto-réducteur supérieur (non représenté).

Chacune des cuves 26 ou 27 est reliée par des circuits de transfert de produits fluides ou fluidisables à des cuves ou trémies de stockage respectivement 30,30ʹ contenant par exemple des liquides alimentaires tels que huile, eau, vin, lait, crème, etc...) ou éventuellement pulvérulents susceptibles d'être acheminé par voie pneumatique. Chaque cuve peut être également reliée (par des conduites pourvues d'électrovannes) à une source de vide et/ou des sources de gaz appropriées (tels que air sous pression, azote, vapeur d'eau) pour cuisson sous pression ou en atmosphère contrôlée ou évacuation pneumatique ; chaque cuve est également reliée à des sources de fluides détergents, bactéricides et de nettoyage susceptibles ainsi d'être acheminés dans l'ensemble des conduites de l'installation, après évacuation des produits alimentaires.

Les ingrédients solides aromatiques et condimentaires qui sont par ailleurs stockés dans les chambres 3,4,5 peuvent être acheminés, (de préférence dans des conteneurs hermétiques), par charges dosées depuis ses réserves vers le poste ou ligne de préparation aromatique 7.

Selon une caractéristique de l'invention l'utilisation d'une pluralité de cuves permet la préparation séparée des divers ingrédients entrant dans la composition de la phase aromatique liquide.

On peut par exemple dans une première cuve réaliser la réduction des produits végétaux aromatiques tels que ail, oignons, échalottes, champignons dans un milieu et à une température correspondant aux règles de l'art culinaire ; et dans une autre cuve on pourra réaliser la préparation des fonds de sauce à partir de produits pulvérulents notamment de compositions incorporant des liants, arômes, épices.

Ces phases préparées séparément peuvent être réunies dans une cuve de précuisson finale avec incorporation des liquides alimentaires tels que eau, huile, vin ou analogues, ceci en fonction des recettes particulières.

Les cuves 26 ou 27 peuvent donc suivre un cycle de préparation en température et en vitesse et rythme d'agitation selon un programme déterminé et correspondant à chaque recette dont les règles et normes sont établies à l'avance.

Dans ces conditions, l'intervention humaine est totalement écartée puisque les liquides et éventuellement les pulvérulents (par exemple en lit fluidisé) peuvent être acheminés directement depuis les réserves de stockage vers la cuve de préparation appropriée ; l'alimentation et le débit de ces produits notamment liquides peuvent être programmés et ne donnent lieu à aucune intervention humaine et notamment aucun passage à l'air libre ; il en est de même du mélange des ingrédients préparés séparément qui peuvent passer d'une cuve à l'autre par les moyens de transfert notamment les conduites qui relient les cuves entre elles.

Ainsi, la préparation des sauces se fait dans des conditions d'aseptie totale, les produits sains introduits étant par ailleurs soumis à un cycle thermique entraînant une pasteurisation des produits ; et la phase aromatique liquide ainsi préparée et dans son état pasteurisé échappe à toute interférence et à toute manipulation notamment à tout passage à l'air libre.

Notamment lorsque l'étape finale est terminée, la phase aromatique liquide peut être acheminée par la conduite 32 jusqu'au poste de déversement 33 vers les conteneurs ou barquettes 24, 24ʹ contenant déjà les produits solides.

Dans ces conditions la phase aromatique liquide pasteurisée arrive au poste 33 dans la ligne de conditionnement 8, immédiatement avant la fermeture et l'operculation des barquettes en évitant ainsi tout passage et toute interférence susceptibles d'entraîner une recontamination des produits sensibles que constitue la phase aromatique liquide destinée à constituer lors de la cuisson finale la sauce du plat.

Les barquettes individuelles 24, 24ʹ sont obtenues, de façon connue en soi, dans un ensemble de conditionnement à partir de la déformation d'un film 36 déroulé depuis la bobine 37, le film 36 constituant les alvéoles définissant les barquettes individuelles ; dans ces dernières sont placés manuellement ou automatiquement les produits solides provenant de la ligne de précuisson 6 à raison du nombre de pièces ou de portions voulues en fonction de la nature du plat ou de la quantité à conditionner dans chaque conteneur ; l'ensemble de déversement de la phase aromatique liquide 33 comporte une trémie supérieure 34 dans laquelle se déverse depuis la conduite 32 la phase liquide provenant de la cuve de préparation robotisée 27 et à la base de la trémie 34 se trouve le dispositif de dosage avec le déversoir 35 de sorte que chaque barquette reçoit la quantité de liquide aromatique appropriée.

Immédiatement ensuite l'ensemble des barquettes, acheminé en continu ou pas à pas, est operculé par soudure sur les bords et transversalement du film inférieur 36 et du film supérieur déroulé depuis la bobine 38 dans le même temps (et de façon connue en soi) l'espace intérieur de la barquette est mis sous vide ; les alvéoles ou barquettes sont ensuite séparées pour donner les conteneurs ou barquettes individuelles 39,40.

Ces dernières sont mises en place sur les clayettes intérieures d'un chariot 41 acheminé vers l'enceinte de cuisson définitive 9.

L'enceinte de cuisson est constituée d'un caisson apte à recevoir les chariots 41,41ʹ.

Le caisson apte à être refermé hermétiquement, éventuellement sous pression, après mise en place des chariots, permet de suivre un cycle thermique selon un programme voulu.

Dans l'exemple ici décrit la transmission des calories est effectuée en phase liquide par déversement en pluie, depuis la rampe 42 d'un liquide caloporteur par exemple de l'eau portée à une température convenable depuis une source d'approvisionnement (non représentée) ; l'eau recueillie à la base du caisson est recyclée après passage sur les moyens de réchauffement.

Le caisson est associé à des moyens de programmation éventuellement informatisés notamment un micro-processeur incorporé à une table ou console de programmation et d'affichage permettant de programmer et de contrôler visuellement le cycle de cuisson (c'est-à-dire l'évolution de la température en fonction du temps), la programmation permettant d'adapter ainsi la cuisson à chaque recette ou préparation composant la charge en cours de cuisson.

Le cycle effectivement suivi est par ailleurs enregistré et les données sont archivées pour chaque lot en même temps que sont conservées et archivées les données correspondantes aux paramètres de préparation des phases antérieures notamment de précuisson superficielle des produits solides dans la première ligne de préparation 6 ou de précuisson de la phase aromatique liquide dans la seconde ligne de préparation 7.

La rampe de pulvérisation intérieure au caisson 42 est également reliée à une seconde source de fluide caloporteur à basse température par exemple de l'eau glacée.

En fin du cycle de cuisson la rampe 42 déverse cette eau pour obtenir un effet de refroidissement rapide et immédiat des produits jusqu'à la température de conservation de 3° ; le déversement de l'eau glacée est maintenu jusqu'à ce que les produits aient atteints à coeur cette température. Les chariots peuvent alors être extraits du caisson, le cycle de cuisson étant terminé les barquettes sont retirées pour être conditionnées et/ou regroupées dans des emballages au poste d'empaquetage 43 et les produits peuvent alors être stockés, distribués, acheminés sans exiger le maintien dans une chaîne du froid aux conditions rigoureuses de température exigées pour les produits surgelés, la température de conservation étant une température correspondant au froid positif c'est-à-dire à une température comprise entre 1 et 5° et de préférence de 3°C.

Les produits ainsi réalisés peuvent être conservés dans de parfaites conditions tant au point de vue bactériologique qu'au point de vue des qualités organoleptiques et gustatives jusqu'à la phase de consommation (après simple réchauffement) pendant une période de plusieurs semaines ; le réchauffement peut être obtenu par passage au bain-marie ou par exposition en phase vapeur, ou encore exposition au four à micro-ondes.

## Revendications

1. Installation pour la préparation de produits alimentaires élaborés et prêts à la consommation, du type "plats cuisinés" et constitués d'une part d'au moins un composant alimentaire principal solide (tel que viandes, poissons, oeufs, légumes) et d'autre part d'une sauce d'accompagnement à l'état sensiblement liquide, conditionnés dans une enveloppe hermétique, constituée d'un sachet en matière synthétique soudé, et ces produits alimentaires étant aptes à une conservation s'étendant sur plusieurs semaines à une température comprise entre 1 et 5°C, caractérisée en ce qu'elle comporte :
a) une ligne (6) de préparation des produits solides tels que viandes ou poissons et comportant un ensemble (17) de diffusion d'un flux laminaire d'air stérile sur la zone (12) d'exposition ou de travail des produits solides en cours de préparation et au moins une enceinte (13, 13') apte à contenir un fluide alimentaire associé à des moyens de chauffage (20) contrôlés et programmables, des moyens de mise en circulation (18, 18') et d'acheminement des produits au sein de ladite enceinte depuis un poste d'entrée (16) vers un poste de sortie (21) et constitué notamment d'un tapis sans fin de convoyage formé d'une grille métallique et associé à des moyens de programmation et de contrôle de la vitesse de défilement du tapis.
b) une seconde ligne (7) de préparation de phases aromatiques liquides et constituée d'au moins une cuve (26, 27) pourvue de moyens de régulation thermique programmables (28) ainsi que des moyens d'agitation intérieurs programmables (29) associés à des moyens de raclage des parois inférieures, les capacités intérieures des cuves étant reliées entre elles dans le cas de pluralité de cuves par des moyens de mise en circulation des fluides et étant reliées également par des circuits de mise en circulation par voie pneumatique à des sources de stockage (30, 30') de produits alimentaires pulvérulents ou liquides, ainsi qu'à des sources de produits liquides détergents et de rinçage et à des sources de gaz tels que air sous pression, azote vapeur d'eau, pour cuisson sous pression ou en atmosphère contrôlée ou évacuation pneumatique.
c) un poste de conditionnement (8) apte à débiter et à acheminer en continu des barquettes (24, 24') en matière synthétique propres à recevoir les produits solides provenant de la ligne (6) d'une part et ladite phase aromatique provenant de la ligne (7) d'autre part.
d) des moyens de déversement (33) de ladite phase aromatique liquide dans chaque barquette et comportant un dispositif de dosage automatique et de déversement (36) dans les barquettes (24, 24'), amenées en défilement en position inférieure sous des becs de déversement reliés à des cuves de préparation de la phase aromatique liquide par une conduite de circulation (32).
e) des moyens de scellement pour fermer les barquettes après mise sous vide.
f) une enceinte de cuisson (9) apte à recevoir les barquettes (24, 24', 25, 25') et comportant intérieurement une rampe de déversement (42) d'eau reliée d'une part à des moyens de recyclage et à des moyens de réchauffement de l'eau, ainsi qu'à une source liquide de froid, à une température comprise entre 0 et 5° C en vue d'assurer le refroidissement de produit en fin de cuisson.

2. Installation selon la revendication 1,
caractérisée en ce que la ligne de préparation (6) des produits solides comporte deux cuves contenant des bains de liquides alimentaires et notamment une première cuve (13) apte à contenir un bain d'huile, et reliée à des moyens de chauffage, apte à recevoir les portions alimentaires solides telles que morceaux de viandes soumises à une phase de grillage et de coloration de surface, cette première cuve étant reliée par des moyens de circulation de fluide et des moyens de filtration à une enceinte fermée (23) de stockage et de mise en réserve de l'huile pendant la période de non-utilisation, et l'installation comporte une seconde cuve apte à contenir un bain (13') alimenté en eau proche de la température d'ébullition en vue de permettre un effet de pochage des produits alimentaires solides mis en circulation, et cette seconde cuve comporte un double tapis sans fin notamment un tapis supérieur (18) et un tapis inférieur (18') entraînés dans un mouvement de défilement synchrone et apte à emprisonner et maintenir les produits alimentaires solides entraînés dans le bain dans leurs trajets conjoints depuis le poste d'entrée vers le poste de sortie.

3. Installation selon l'une des revendications 1 ou 2,
caractérisée en ce qu'elle comporte une pluralité de cuves (26, 27) de préparation des phases aromatiques liquides, chaque cuve étant pourvue de moyens programmables de chauffage (28), d'agitation (29) et de raclage intérieur des parois et des conduites d'alimentation reliant chaque cuve à des sources et poste de stockage (30, 31) de produits alimentaires liquides ou pulvérulents et des sources d'alimentation en liquide de lavage et de rinçage, les cuves étant reliées entre elles par des conduites de communication et de transfert de fluides, l'ensemble des conduites comportant une pluralité de vannes et pompes pour assurer les transferts des fluides lesdites cuves étant associées à des moyens de programmation et de télécommande permettant d'afficher et de télécommander les ordres et consignes correspondant aux cycles de mise en circulation des fluides, aux cycles de température et aux cycles d'agitation, et cette ligne (7) de préparation de la phase aromatique liquide comporte également des moyens d'enregistrement des paramètres tels que la température, la pression, la vitesse d'agitation, le dosage des fluides introduits.

4. Installation selon l'une des revendications 1, 2 ou 3,
caractérisée en ce que l'enceinte de cuisson (9) est associée à des moyens de programmation notamment informatisés tels qu'un micro-processeur, apte à contrôler l'alimentation des rampes (42) en liquide caloporteur et à permettre le pilotage programmé des phases de cuisson selon un cycle de température et de pression prédéterminée.

## Claims

1. Installation for the preparation of food products prepared and ready for consumption, of the "cooked dish" type and constituted, on the one hand, by at least one solid principal food component (such as meat, fish, eggs, vegetables) and, on the other hand, an accompanying sauce in the substantially liquid state, packed in a hermetic envelope constituted by a sachet of welded synthetic matter, and these food products being adapted to be preserved for several weeks at a temperature included between 1 and 5°C, characterized in that it comprises:
a) a line (6) for preparing the solid products such as meat or fish and comprising an assembly (17) for diffusion of a laminar flow of sterile air over the zone (12) of exposure or of work of the solid products in the course of preparation and at least one enclosure (13, 13') adapted to contain an alimentary fluid associated with controlled and programmable heating means (20), means (18, 18') for circulating and guiding the products within said enclosure from an inlet station (16) towards an exit station (21) and constituted in particular by an endless conveyor belt formed by a metal grating and associated with means for programming and controlling the speed of advance of the belt,
b) a second line (7) for preparing liquid aromatic phases and constituted by at least one vat (26, 27) provided with programmable heat regulation means (28) as well as programmable internal stirring means (29) associated with means for scraping the lower walls, the internal volumes of the vats being connected together in the case of a plurality of vats by fluid circulation means and also being connected by circuits for circulation by pneumatic means to sources (30, 30') for storing powdery or liquid food products, as well as to sources of detergent and rinsing liquid products and to sources of gas such as pressurized air, nitrogen, water vapour, for cooking under pressure or in a controlled atmosphere or pneumatic evacuation,
c) a packing station (8) adapted to continuously deliver and guide containers (24, 24') made of synthetic material adapted to receive the solid products coming from the line (6) on the one hand and said aromatic phase coming from the line (7) on the other hand,
d) means (33) for pouring said liquid aromatic phase in each container and comprising a device (36) for automatically dosing and pouring into the containers (24, 24'), advanced in lower position beneath pouring spouts connected to vats for preparing the liquid aromatic phase via a circulation conduit (32),
e) sealing means for closing the containers after evacuation,
f) a cooking enclosure (9) adapted to receive the containers (24, 24', 25, 25') and internally comprising a nozzle (42) for pouring water connected on the one hand to recycling means and to water reheating means, as well as to a liquid source of cold, at a temperature of between 0 and 5°C, with a view to ensuring refrigeration of the product at the end of cooking.

2. Installation according to Claim 1,
characterized in that the line (6) for preparing the solid products comprises two vats containing baths of alimentary liquids and in particular a first vat (13) adapted to contain a bath of oil, and connected to heating means, adapted to receive the solid food portions such as pieces of meat subjected to a phase of grilling and surface-browning, this first vat being connected by fluid circulation means and filtration means to a closed enclosure (23) for storing and reserving the oil during the period of non-use, and the installation comprises a second vat adapted to contain a bath (13') supplied with water close to boiling point with a view to allowing an effect of poaching of the solid food products in circulation, and this second vat comprises a double endless belt, in particular an upper belt (18) and a lower belt (18') driven in a synchronous advance movement and adapted to imprison and maintain the solid food products entrained in the bath in their joint paths from the inlet station towards the exit station.

3. Installation according to one of Claims 1 or 2,
characterized in that it comprises a plurality of vats (26, 27) for preparing the liquid aromatic phases, each vat being provided with programmable heating (28), stirring (29) means and means for internally scraping the walls and supply conduits connecting each vat to sources and station (30, 31) for storing liquid or powdery food products and sources of supply of washing and rinsing liquid, the vats being connected together by communication and fluid transfer conduits, the assembly of the conduits comprising a plurality of valves and pumps to ensure transfers of the fluids, said vats being associated with programmation and remote-control means for displaying and remotely controlling the orders corresponding to the fluid circulation cycles, to the temperature cycles and to the stirring cycles, and this line (7) for preparing the liquid aromatic phase also comprises means for recording the parameters such as temperature, pressure, speed of stirring, dosing of the fluids introduced.

4. Installation according to one of Claims 1, 2 or 3,
characterized in that the cooking enclosure (9) is associated with programmation means, particularly computerized, such as a micro-processor, adapted to monitor the supply of the nozzles (42) with heat-bearing liquid and to allow programmed piloting of the cooking phases in a predetermined temperature and pressure cycle.

## Patentansprüche

1. Vorrichtung zur Vorbereitung von zubereiteten und zum Konsum fertigen Nahrungsmitteln von der Art eines "Fertiggerichts", die einerseits aus mindestens einem festen Hauptnahrungsmittel (beispielsweise Fleisch, Fisch, Eier, Gemüse) und andererseits einer begleitenden Sauce in flüssigem Zustand bestehen und in einer luftdichten, aus einem aus Kunststoff geschweißten Beutel bestehenden Hülle abgepackt sind, wobei diese Nahrungsmittel über mehrere Wochen bei einer Temperatur zwischen 1 und 5°C haltbar sind, dadurch gekennzeichnet, daß
a) daß eine Zubereitungslinie (6) für feste Nahrungsmittel wie Fleisch oder Fisch und eine Anordnung (17) zur Verbreitung eines laminaren Stroms steriler Luft auf eine exponierte oder Arbeitszone (12) der festen, in der Zubereitung befindlichen Nahrungsmittel, und mindestens ein sich zur Aufnahme einer Nahrungsflüssigkeit eignender Bereich (13, 13') vorgesehen sind, die mit kontrollierten und programmierbaren Heizmitteln (20) in Verbindung steht sowie mit Mitteln zur In-Umlaufsetzung (18, 18') und Beförderung der Produkte im Inneren des Bereichs von einem Eingang (16) zu einem Ausgang (21) und gebildet insbesondere aus einem endlosen Band zum Transport, das aus einem Metall-Gitter besteht und mit Mitteln zum Programmieren und zur Kontrolle der Geschwindigkeit des Vorbeiziehen des Bandes in Verbindung steht;
b) eine zweite Vorbereitungslinie (7) für die aromatischen flüssigen Phasen vorgesehen ist, die aus mindestens einem Behälter (26, 27) besteht, der mit programmierbaren Mitteln (28) zur Wärmeregulierung sowie mit programmierbaren Mitteln (29) zur inneren Bewegung versehen ist, die in Verbindung mit Mitteln zum Abkratzen der unteren Wände stehen, wobei im Falle von mehreren Behälter die inneren Rauminhalte der Behälter miteinander verbunden sind durch Mittel zur In-Umlaufsetzung der Flüssigkeiten und ebenso mit Speicherquellen (30, 30') für pulverisierte oder flüssige Nahrungsmittel durch Kreisläufe zur In-Umlaufsetzung auf pneumatischem Weg, sowie mit Quellen flüssiger Reinigungs- und Spülprodukte und mit Gasquellen wie Druckluft, Stickstoff und Wasserdampf zum Kochen unter Druck oder unter kontrollierter Atmosphäre oder im Vakuum;
c) eine Verpackungsstation (8) zum Liefern und ständigen Weitergeben der Kunststoffbehälter (24, 24') vorgesehen ist, die einerseits die von der Linie (6) stammenden festen Produkte und andrerseits die von der Linie (7) stammende aromatischen Phase aufnehmen;
d) Mittel zum Abfließen (33) der aromatischen flüssigen Phase in jeden Behälter vorgesehen sind mit einer Vorrichtung zur automatischen Dosierung und zum Abfließen (36) in die Behälter (24, 24'), die einzeln nacheinander in eine Position unterhalb der Abflußschnäbel herangeführt werden, die mit den Vorbereitungsbehältern für die flüssige aromatische Phase durch eine Umlaufleitung (32) verbunden sind;
e) Mittel zum Verschließen der Behälter nach Herstellung eines Vakuums vorgesehen sind;
f) ein Kochbereich (9) zum Aufnehmen der Behälter (24, 24', 25, 25') vorgesehen ist mit einer inneren Wasserabflußrampe (42), die mit Mitteln zur Rückführung und zum Wiederaufheizen des Wassers verbunden ist, und mit einer Kühlflüssigkeitsquelle mit einer Temperatur zwischen 0 und 5°C, um das Abkühlen des Produktes am Ende des Kochens sicherzustellen.

2. Vorrichtung nach Anspruch 1,
dadurch gekennzeichnet, daß die Zubereitungslinie (6) für das feste Produkt zwei Behälter aufweist, die die Bäder aus Nahrungsflüssigkeit und insbesondere einen ersten, ein Ölbad enthaltenden und Heizmittel aufweisenden Behälter (13) umfaßt, der die festen Nahrungsmittelportionen wie Fleischstücke aufnimmt, die einer Grillphase und Oberflächenbräunung ausgesetzt sind, wobei der erste Behälter durch Flüssigkeitsumwälz- und Filtermittel mit einem abgeschlossenen Bereich (23) zum Sammeln und zur Bildung einer Ölreserve während der Periode des Nicht-Gebrauchs verbunden ist, und daß einer zweiter Behälter vorgesehen ist zum Aufnehmen eines Bades (13'), das mit sich nahe dem Siedepunkt befindlichen Wasser gespeist wird, um die festen, sich im Umlauf befindlichen Nahrungsmittel zu pochieren, wobei dieser zweite Behälter ein doppeltes endloses Band, insbesondere einen oberes Band (18) und einen unteres Band (18') aufweist, die in eine Bewegung des synchronen Vorbeiziehens versetzt werden und die die festen Nahrumgsmittel einfangen, festhalten und durch das Bad ziehen auf ihren gemeinsamen Weg vom Eingang bis zum Ausgang.

3. Vorrichtung nach einem der Ansprüche 1 oder 2,
dadurch gekennzeichnet, daß eine Mehrzahl von Behältern (26, 27) zur Vorbereitung der aromatischen flüssigen Phasen vorgesehen ist, wobei jeder Behälter mit programmierbaren Heiz- (28), Bewegungs- (29) und inneren Abkratzmitteln für die Wände versehen ist, und wobei die Versorgungsleitungen, die jeden Behälter mit den Speicherquellen und -stationen (30, 31) für flüssige oder pulverisierte Nahrungsmittelprodukte und den Versorgungsquellen für Wasch- und Spülflüssigkeiten verbinden, wobei die Behälter miteinander durch Verbindungs- und Transportleitungen für Fluide verbunden sind und die Leitungsanordnung eine Vielzahl von Schiebern und Pumpen umfaßt, um den Transport der Fluide sicherzustellen, wobei die Behälter mit Mitteln zum Programmieren und Fernsteuern verbunden sind, um die den Fluid-Umlaufzyklen, Temperaturzyklen und den Bewegungszyklen entsprechenden Befehle und Anweisungen anzuzeigen und fernzusteuern, und die Vorbereitungslinie (7) für die aromatische flüssige Phase ebenso Mittel zum Aufzeichnen der Parameter wie Temperatur, Druck, Bewegungsgeschwindigkeit, Dosierung der beigefügten Fluide, aufweist.

4. Vorrichtung nach einer der Ansprüche 1, 2 oder 3,
dadurch gekennzeichnet, daß der Kochbereich (9) mit Mitteln zur Programmierung, insbesondere Datenverarbeitungsmitteln, wie beispielsweise einem Mikroprozessor, verbunden ist, um die Versorgung der Rampen (42) mit wärmetransportierender Flüssigkeit zu steuern und das programmierte Führen der Kochphasen je nach Zyklus der Temperatur und des vorbestimmten Druckes zu ermöglichen.
